# DEMANDE DE BREVET EUROPEEN

(11) **EP 1 462 837 A1**
(43) Date de publication de la demande: **29.09.2004**
(21) Numéro de dépôt: 04290681.8
(22) Date de dépôt: 08.03.2004
(51) Int. Cl.: G02B 6/44

(54) **Câble à fibre optique comprenant une couche isolante à base de polymères**

(30) Priorité: 11.03.2003 FR 0302965
(71) Demandeur: ALCATEL, 75008 Paris (FR)
(72) Inventeur: Cottevieille, Christian, 93100 Montreuil Sous Bois (FR); Laurec, Gilles, 78830 Bonnelles (FR); Aladenize, Bernard, 78700 Conflans-ste-Honorine (FR)
(74) Mandataire: Lamoureux, Bernard

(57) **Abrégé**

La présente invention a pour objet un câble à fibre optique 21 comprenant au moins un élément porteur central 22 et au moins une fibre optique 23, un conducteur métallique 24 entourant ladite fibre et une couche d'une composition isolante 25 entourant ledit conducteur. Selon l'invention la composition est constituée principalement d'un mélange de polymères comprenant au moins un premier polymère de haute densité et un deuxième polymère de basse densité, le deuxième polymère ayant une viscosité moindre que le premier polymère. Selon un mode de réalisation préféré, le premier polymère est un polyéthylène de haute densité et le deuxième polymère est un polyéthylène de basse densité.

## Description

La présente invention se rapporte à un câble à fibre optique comprenant une couche d'une composition à base de polymères. Il s'agit en particulier de câble de type sous-marin utilisable pour les télécommunications à longue distance. L'invention s'étend en outre au procédé de fabrication de ce câble.

Les câbles sous-marins doivent fonctionner avec une grande fiabilité pendant au moins 25 ans dans l'environnement hostile du fond des mers, ce qui exige des conceptions spéciales de câbles.

Dans un câble de télécommunication longue distance à fibre optique, l'intensité lumineuse transportée par la fibre s'atténue progressivement et doit donc être amplifiée régulièrement (typiquement tous les 50kms). Cette amplification réalisée par des modules optiques nécessite l'apport d'énergie électrique pour alimenter les diodes laser. Dans les câbles de télécommunication longue distance sous-marins, l'énergie électrique est transportée sur le même câble en même temps que le transport des communications (câbles télé-alimentés).

Un tel câble est constitué d'au moins trois parties principales : une âme optique comprenant des fibres optiques et transportant les informations, un conducteur électrique composite transportant l'énergie électrique nécessaire à l'alimentation des répéteurs, et un isolant pour séparer le conducteur électrique de l'eau de mer. Autour de cette structure, diverses couches assurant la protection mécanique du câbles peuvent être ajoutées selon les contraintes mécaniques que le câble peut être amené à subir. Dans les câbles posés sur les grands fonds marin, les contraintes mécaniques subies par le câble sont faibles et l'isolant est en contact direct avec l'eau de mer, dans ce cas cet isolant assure également la protection mécanique du câble contre l'abrasion.

De manière courante, on réalise l'isolation en extrudant autour du conducteur une couche de polyéthylène de haute densité pour protéger le câble contre l'abrasion et isoler de l'eau de mer la couche externe métallique du conducteur, généralement en acier ou en cuivre.

L'alimentation des répéteurs nécessite de disposer d'une puissance électrique suffisante. Celle-ci est proportionnelle au nombre de répéteurs à alimenter, c'est à dire au nombre de fibres dans le câble et à la longueur du câble. Lorsque la puissance électrique nécessaire est importante, elle peut être apportée soit en augmentant le courant l soit en augmentant la tension V. Pour des puissances élevées, il est généralement plus avantageux de la transporter sous un courant l faible (de façon à limiter la section du conducteur, donc le poids du câble) et sous une tension V élevée. Dans ce cas la contrainte électrique appliquée sur l'isolant (gradient de tension) augmente. Compte tenu de la grande fiabilité requise pour ce type de câble, il faut donc trouver des isolants permettant de supporter sans risque des gradients de tension élevés.

La fiabilité d'un câble utilisant un tel isolant dépend de sa tension de service et de la durée d'application de cette tension. Dans un câble sous-marin de télécommunication longue distance à fibres optiques, la tension est maximum et de polarité opposée aux deux extrémités du câble, et nulle au milieu. La décroissance de la tension d'une extrémité au point milieu peut être considérée comme linéaire. La fiabilité de l'ensemble d'un câble, par exemple de 5000kms, est obtenue en faisant le produit de la probabilité de survie obtenue pour chaque élément de longueur, par exemple de 0,5km. Pour un câble de télécommunication sous-marin, une durée de vie de 25 ans impose une probabilité de défaillance par claquage inférieure à 10⁻¹².

Le document WO-97/03 124 décrit une composition de gaine pour câble d'énergie ou de communication consistant en un mélange de polyoléfines. Selon un mode de réalisation particulier, le mélange comprend au moins un premier polymère ayant un indice de fluidité (MFR) de 0,1 à 0,8 g/10mn et une densité de 0,88-0,93 g/cm³, et un second polymère ayant un indice de fluidité de 50-2000 g/10mn et une densité de 0,93-0,975 g/cm³. La proportion de second polymère est de préférence d'au moins 25% du poids de mélange.

Par ailleurs le document EP-0 287 244 décrit un câble sous-marin à fibres optiques pour les télécommunication à longue distance ayant une couche d'une composition comprenant un polyéthylène linéaire de moyenne densité qui est un copolymère de l'éthylène et d'une α-oléfine C₄-C₁₀. La composition peut contenir en outre d'autre additifs utilisés classiquement dans les isolants comme une charge, un stabilisant ou du noir de carbone.

La présente invention a pour but d'éliminer les inconvénients de l'art antérieur et, en particulier, de proposer un câble à fibre optique dont la résistance au claquage est améliorée.

L'objet de la présente invention est un câble à fibre optique comprenant au moins un élément porteur central et au moins une fibre optique, un conducteur métallique entourant ladite fibre et une couche d'une composition isolante entourant ledit conducteur, ladite composition étant constituée principalement d'un mélange de polymères comprenant au moins un premier polymère de haute densité et un deuxième polymère de basse densité, le polymère de basse densité ayant une viscosité moindre que le polymère de haute densité.

Selon un premier aspect de l'invention, le premier polymère est un polymère de haute densité et de viscosité élevée. Un polymère de haute densité est un polymère dont la densité est comprise entre 0,945 et 0,975g/cm³ (cf. "Pratique des matériaux industriels" Editions DUNOD). Par polymère de viscosité élevée, on entend un polymère dont l'indice de fluidité mesuré selon la norme ISO CD 1133 (avec une charge de 2,16 kg à 190°C) est inférieur à 6 g/10mn.

Selon un premier aspect de l'invention, le deuxième polymère est un polymère de basse densité et de viscosité faible. Un polymère de basse densité est un polymère dont la densité est comprise entre 0,915 et 0,945g/cm³ (cf. "Pratique des matériaux industriels" Editions DUNOD). Par polymère de viscosité faible, on entend un polymère dont l'indice de fluidité mesuré selon la norme ISO CD 1133 est au moins le double de l'indice de fluidité du polymère de viscosité élevée.

Selon un premier mode de réalisation, le premier polymère est un polyéthylène de haute densité.

Selon un deuxième mode de réalisation, le deuxième polymère est un polyéthylène de basse densité.

Selon un troisième mode de réalisation, le premier polymère est un polyéthylène de haute densité et le deuxième polymère est un polyéthylène de basse densité.

Par polyéthylène, on entend des polyéthylènes linéaire ou ramifiés, ainsi que des copolymères d'éthylène soit avec une α-oléfine soit avec un autre monomère dont la teneur ne dépasse pas 15%.

Avantageusement la proportion du deuxième polymère est telle que l'influence des défauts intrinsèques du deuxième polymère reste négligeable dans la statistique de claquage. De préférence la proportion du deuxième polymère est au plus de 20% en poids du mélange de polymères. De préférence encore cette proportion est comprise entre 5% et 20% en poids du mélange de polymères.

La composition isolante selon la présente invention peut en outre comprendre d'autre additifs utilisés classiquement comme par exemple des charges, des stabilisants ou des lubrifiants.

D'autres caractéristiques et avantages de la présente invention apparaîtront à la lecture de la description qui suit de modes de réalisation, donné bien entendu à titre illustratif et non limitatif, et dans le dessin annexé sur lequel la figure unique représente :
- la figure 1 représente une vue de profil de l'extrudeuse bi-vis utilisée pour la réalisation de la présente invention,
- la figure 2 est une coupe d'un câble sous-marin de télécommunication comprenant l'invention,
- la figure 3 est une représentation schématique de la probabilité de claquage cumulé de deux composition isolantes différentes en fonction du champ électrique,
- la figure 4 représente l'échantillon de test en forme de gobelet,
- les figures 5 et 6 montre la probabilité de claquage cumulé en fonction du champ électrique pour des compositions isolantes selon l'invention en comparaison avec une composition isolante de référence.

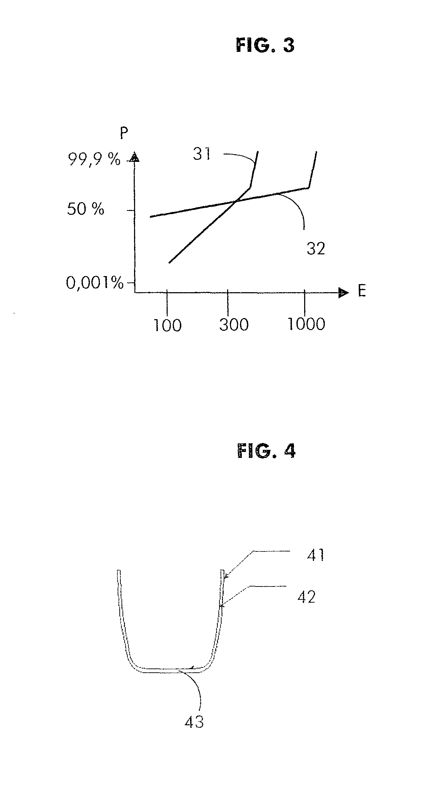

Sur les figures 3, 5 et 6, la probabilité de claquage cumulé P en % est donnée en ordonné et le champ électrique E est représenté en abcisse selon une échelle logarithmique, dite représentation de Weibull.

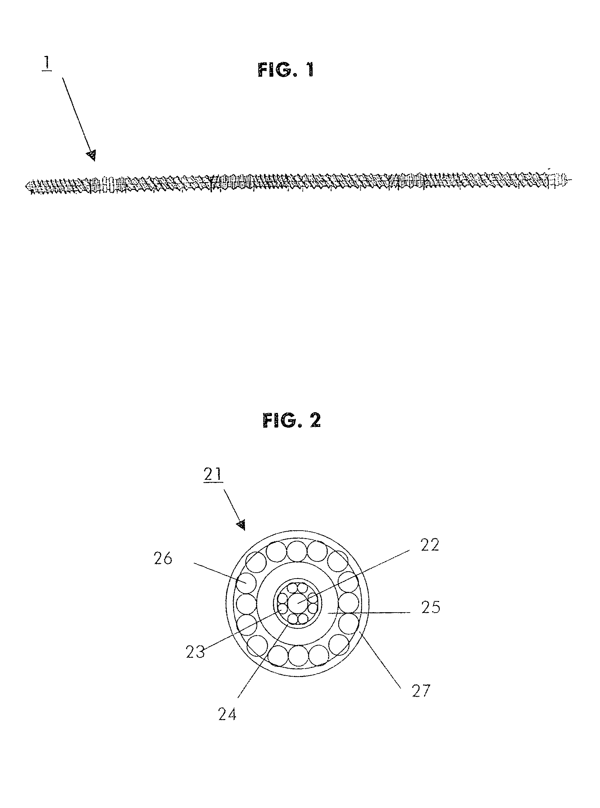

Le mélange selon l'invention est réalisé avec une extrudeuse bi-vis de marque "Dr Collins" dont la longueur L est égale à environ 25 fois son diamètre D, soit dans le cas présent pour un diamètre D de 19mm une longueur L de 47,5cm. L'extrudeuse **1** utilisée est représentée de profil sur la figure 1. La vitesse de rotation de la vis est comprise entre 100 tr/mn et 200 tr/mn. Le profil de température le long de l'extrudeuse **1** entre l'entrée et la sortie est le suivant :
100°C / 160°C / 180°C / 200°C / 200°C / 210°C / 215°C / 220°C.
Ce profil est donné depuis l'entrée des composants du mélange jusqu'à la sortie du mélange obtenu, dans la direction de progression du mélange.

Ce mélange peut également être réalisé selon les techniques classiques utilisant par exemple des mélangeurs internes, mélangeurs continus (type Buss) une extrudeuse avec vis mélangeuse, etc...

Sur la figure 2, on a représenté en coupe un câble sous-marin **21** selon l'invention. Un élément porteur central **22** confère à l'âme optique sa résistance mécanique. Des fibres optiques **23** entoure l'élément **22.** Le conducteur est constituée par un tube **24,** d'acier ou de cuivre, et il est entourée d'une couche isolante **25** constituant une gaine interne. Des couches externes supplémentaires telles qu'une armature **26,** par exemple en fil d'acier galvanisé, et un revêtement externe de protection **27,** par exemple en polyéthylène haute densité, peuvent y être ajoutées pour assurer une meilleure protection du câble.

La couche isolante **25** faisant l'objet de la présente invention est composée, par exemple, du mélange de 90% de polyéthylène de haute densité d'indice de fluidité 0.05 g/10mn et de 10% de polyéthylène de basse densité d'indice de fluidité 22 g/10mn.

La probabilité de claquage d'un isolant dépend d'une part de la qualité intrinsèque de l'isolant (probabilité de claquage intrinsèque), d'autre part de la probabilité de présence de défauts dans l'isolant et de leur nocivité vis à vis du champ électrique.

A titre d'exemple, la figure 3 est une représentation schématique de la courbe de probabilité de claquage cumulée **P** de deux compositions isolantes différentes en fonction du champ électrique **E.** La figure 3 est représentée en échelle de Weibull conformément à l'usage pour ce type d'essai. Le champ électrique de claquage pour des probabilité élevées correspond à la qualité intrinsèque de la composition isolante. Par exemple, on remarque sur la figure 3 que la qualité intrinsèque de la composition isolante représentée par la courbe **31** est supérieure à la qualité intrinsèque de la composition isolante représentée par la courbe **32**. Pour les faibles probabilités de claquage, la pente de la probabilité de claquage **P** en fonction du champ électrique **E** correspond à la présence des défauts et à leur nocivité. Ainsi, dans l'exemple de la figure 3, les défauts présents dans la composition isolante représentée par la courbe **31** sont plus nombreux et/ou plus nocifs que les défauts présents dans la composition isolante représentée par la courbe **32** car la pente est plus élevée pour la courbe **32** que pour la courbe **31.**

Lorsqu'on réalise la couche isolante avec un polymère de viscosité élevée et de haute qualité intrinsèque, comme le polyéthylène de haute densité de l'art antérieur, cette couche présente après mise en forme de nombreux défauts qui piègent les charges d'espace et provoque une augmentation du champ électrique interne. Nous avons donc étudié la probabilité de claquage de différents isolants. Ces essais n'ont pas été réalisés sur des câbles mais sur des échantillons de laboratoire en forme de gobelet comme représenté sur la figure 4 ayant à son ouverture un diamètre externe **41** de 16mm et un diamètre interne **42** de 15,2mm. Ces échantillons sont réalisés à l'aide d'une presse en salle blanche pour limiter les risque de pollution. Ce procédé permet d'obtenir des échantillons d'une grande reproductibilité géométrique en grande quantité dans des délais relativement courts. La tension électrique est appliquée entre l'intérieur et l'extérieur sur le fond du gobelet qui a un profil de Rogowski et une épaisseur **43** de 0,20mm. Une rampe de tension continue est appliquée à une vitesse de 2kV/s jusqu'au claquage. La probabilité de claquage est mesurée sur des séries de 25 échantillons.

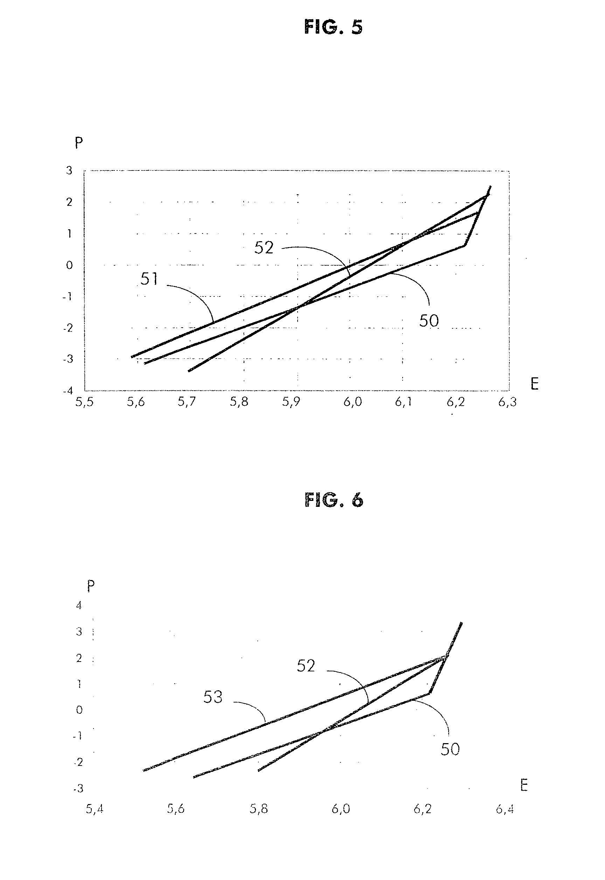

La courbe de probabilité de claquage **50** de la composition isolante de référence actuellement utilisé dans les meilleurs câbles de télécommunication sous-marins est présentée sur la figure 5, en coordonnées de Weibull. Ce polyéthylène est commercialisé sous la référence "47100 UV" par la société ATOFINA. Il a un indice de fluidité de 0,05 g/10mn. Le champ de claquage intrinsèque est de l'ordre de exp(6,22) = 500 kV/mm. La quantité et/ou nocivité des défauts est caractérisée par la pente de la droite. Cette pente, notée β dans les analyses de Weibull, vaut ici β=5,6.

La figure 4 compare la courbe **50** de probabilité de claquage de l'isolant de référence aux courbes **51** et **52** de probabilité de claquage de ce même isolant contenant respectivement 5% et 10% d'un polyéthylène beaucoup plus fluide, d'indice de fluidité de 22 g/10mn. On observe que la pente de la droite de Weibull augmente, ce qui signifie que le nombre et/ou la nocivité des défauts diminue. La qualité intrinsèque de l'isolant apparaît amélioré par l'addition de ces quantités de polyéthylène fluide. La pente β vaut 7,3 avec une addition de 5% de polymère fluide et β vaut 9,3 avec une addition de 10% de polymère fluide.

On observe que la valeur de rigidité diélectrique de la couche isolante selon la présente invention est augmentée de 10% par rapport à une couche isolante de l'art antérieur composée seulement de polyéthylène de haute densité. En outre la viscosité de la composition mise en oeuvre est abaissée de 5% par rapport au polyéthylène de haute densité, ce qui permet l'extrusion du câble à une vitesse supérieure.

Ce résultat est très intéressant pour l'application dans le cas des câbles de télécommunication sous-marins car dans ce cas, le champ électrique de fonctionnement est faible. Compte tenu de la différence entre la géométrie du câble et la géométrie de test, le champ équivalent au fonctionnement du câble est nettement inférieur à 200 kV/mm soit InE nettement inférieur à 5,4 et on constate sur la figure 4 que, dans cette zone, la probabilité de claquage est plus faible pour le mélange comportant 10% de polymère fluide.

On constate également sur la figure 4 que l'addition du polymère fluide dégrade légèrement la tenue diélectrique intrinsèque du polyéthylène de référence. Cette dégradation n'a aucune influence pratique pour ce type d'application car elle se produit à des champs électriques qui ne correspondent pas aux champs électriques de service du câble. Elle peut s'expliquer par l'incorporation dans le système d'isolation, de défauts provenant du polymère fluide.

La figure 5 représente la courbe **50** de probabilité de claquage du polyéthylène de référence comparée aux courbes **52** et **53** de probabilité de claquage de ce même polyéthylène additionné respectivement de 10% et de 20% de polymère fluide. On constate que dans le cas présent l'addition d'une forte quantité de polymère fluide ne permet pas d'améliorer encore les propriétés électriques du mélange. Ceci s'explique par la contribution au claquage des défauts présents dans le polymère fluide.

L'explication de ces résultats est la suivante : parmi les défauts présents dans le polymère de référence, il se forme en particulier des cavités à dimension sub-micronique. La taille critique de ces sub-microcavités diminue lorsque le champ électrique appliqué augmente. Dans la présente invention, l'addition dans le premier polymère de viscosité élevée d'un autre polymère dont la viscosité est plus faible permet de combler une partie de ces microcavités. En diminuant ainsi le nombre de défaut dans la couche, on augmente sa rigidité diélectrique et on abaisse la probabilité de défaillance. Bien entendu, si le taux de polymère ajouté est important, la qualité diélectrique de ce polymère influence la qualité diélectrique du mélange. Si la qualité diélectrique du polymère fluide est inférieure à celle du polymère visqueux, au dessus d'un certain taux de polymère fluide l'avantage apporté par l'élimination des microcavités est annulé par la moins bonne qualité diélectrique du polymère. Ce taux critique dépend de la qualité diélectrique du polymère fluide.

Bien entendu cette explication est apportée à titre d'hypothèse, la validité de l'invention ne saurait être remise en cause si l'amélioration constatée provient d'un autre mécanisme physique.

## Revendications

1. Câble à fibre optique comprenant au moins un élément porteur central et au moins une fibre optique, un conducteur métallique entourant ladite fibre et une couche d'une composition isolante entourant ledit conducteur, ladite composition étant constituée principalement d'un mélange de polymères comprenant au moins un premier polymère de haute densité et un deuxième polymère de basse densité, **caractérisé en ce que** ledit deuxième polymère a une viscosité moindre que ledit premier polymère. ladite composition étant constituée principalement d'un mélange de polymères comprenant au moins un premier polymère de haute densité et un deuxième polymère de basse densité, **caractérisé en ce que** ledit deuxième polymère a une viscosité moindre que ledit premier polymère.

2. Câble selon la revendication 1, dans lequel ledit premier polymère est un polymère ayant un indice de fluidité inférieur à 6 g/10mn.

3. Câble selon l'une des revendications 1 et 2, dans laquelle ledit premier polymère est un polyéthylène de haute densité et ledit deuxième polymère est un polyéthylène de basse densité.

4. Câble selon l'une des revendications précédentes, dans laquelle la proportion dudit deuxième polymère est au plus de 20% en poids dudit mélange de polymère.

5. Câble selon la revendication 4, dans laquelle la proportion dudit deuxième polymère est comprise entre 5% et 20% en poids dudit mélange de polymères.

6. Câble selon l'une des revendications précédentes, dans laquelle ladite composition isolante contient en outre des additifs.

7. Procédé de ralisation d'un câble selon l'une des revendications précédentes, dans lequel le mélange desdits premier et deuxième polymères est effectué avec une extrudeuse bi-vis.

8. Procédé selon la revendication 7, dans lequel la longueur de ladite extrudeuse est égale à environ 25 fois son diamètre.

9. Procédé selon l'une des revendications 7 et 8, dans lequel la vitesse de rotation de ladite extrudeuse est comprise entre 100 tours/mn et 200 tours/mn.

10. Procédé selon l'une des revendications 7 à 9, dans lequel le profil de température le long de ladite extrudeuse entre l'entrée et la sortie est le suivant :
100°C / 160°C / 180°C / 200°C / 200°C / 210°C / 215°C / 220°C.
